# FASCICULE DE BREVET EUROPEEN

(11) **EP 0 444 534 B1**
(45) Date de publication et mention de la délivrance du brevet: **06.04.1994**
(21) Numéro de dépôt: 91102553.4
(22) Date de dépôt: 21.02.1991
(51) Int. Cl.: B29B 13/02, H05B 6/80, F27D 11/12

(54) **Procédé et dispositif pour fondre un produit organique à l'aide de micro-ondes**
Verfahren und Apparat zum Schmelzen von organischen Stoffen mit Hilfe von Mikrowellen
Method and apparatus for melting an organic product by microwave

(30) Priorité: 28.02.1990 FR 9002610
(43) Date de publication de la demande: 04.09.1991
(73) Titulaire: COMPAGNIE GENERALE DES ETABLISSEMENTS MICHELIN - MICHELIN & CIE, 63040 Clermont-Ferrand Cédex (FR)
(72) Inventeur: Gouttebessis, Jacques, F-63530 Volvic (FR); Germain, Alain, F-92220 Bagneux (FR)
(74) Mandataire: Doussaint, Jean-Marie

(56) Documents cités:
- EP-A- 0 171 309
- FR-A- 961 102
- FR-A- 2 599 665
- GB-A- 2 122 859
- US-A- 4 144 986
- US-A- 4 673 782

## Description

L'invention concerne les dispositifs et les procédés utilisant des micro-ondes.

Les fours à micro-ondes sont bien connus. Ils sont constitués par une enceinte métallique et une source de micro-ondes, parfois appelée "magnétron". On dispose dans l'enceinte un produit que l'on veut chauffer ou fondre, ce produit étant placé dans un récipient diélectrique non conducteur, l'utilisation de récipients métalliques introduits dans une enceinte métallique étant impossible.

Les industries utilisant des matières organiques, et notamment l'industrie des matières plastiques, nécessitent souvent la fusion de produits organiques emballés dans des récipients métalliques. Tel est le cas par exemple de la technique de fabrication des polyuréthannes. On est amené dans ce cas à polymériser des prépolymères qui sont livrés sous forme solide dans des fûts métalliques. Il est alors nécessaire de réchauffer ces produits pour les faire fondre, mais ce chauffage doit être effectué avec précaution, car si la température des prépolymères dépasse une valeur donnée, par exemple 75°C, pendant un temps trop long, il y a dégradation de ces produits avec formation d'allophanates, par exemple, ce qu'il faut éviter. On est donc conduit à effectuer un chauffage progressif et limité.

On peut réaliser ce chauffage dans une étuve, mais le temps de chauffage est très long, par exemple de l'ordre de 72 heures pour un fût de 200 litres. D'autre part, la dépense en énergie est très importante.

FR-A-2 599 665 et US-A-4 673 782 décrivent la fusion de produits disposés dans des récipients, cette fusion étant réalisée, par des micro-ondes, à la base des récipients.

GB-A-2 122 859 décrit la fusion par micro-ondes d'un produit disposé dans un récipient. Les micro-ondes sont introduites dans le récipient par des guides d'ondes fixés au récipient, les parois du récipient étant refroidies pour que le produit reste solide au contact de celles-ci.

Le but de l'invention est d'éviter ces inconvénients. En conséquence, l'invention concerne un procédé permettant de fondre un produit organique à l'aide de micro-ondes, ce procédé, dans lequel on fixe au moins un guide d'ondes à un récipient métallique contenant le produit organique solide initial, étant caractérisé par les points suivants :
a) on dirige des micro-ondes par ce ou ces guides d'ondes de telle sorte que le champ électromagnétique de ces micro-ondes soit directement au contact de la surface supérieure libre du produit solide ; ce champ électromagnétique provoque la fusion de la partie supérieure du solide donnant ainsi une couche supérieure liquide ;
b) on érode la partie encore solide du produit qui se trouve au contact du liquide, de façon à obtenir des particules de produit solide en suspension dans le liquide, et on agite cette suspension ;
c) l'érosion et l'agitation progressent vers le bas du récipient en même temps que la fusion du produit, alors que l'on continue de faire arriver le champ électromagnétique au contact de la surface libre du liquide, au moins pendant une partie du temps de fusion ;
d) on fait sortir le produit du récipient lorsqu'il est entièrement fondu.

L'invention concerne également un dispositif permettant de fondre un produit organique à l'aide de micro-ondes, ce dispositif, qui comporte au moins un guide d'ondes pour micro-ondes, et des moyens permettant de fixer le ou les guides d'ondes à un récipient métallique contenant le produit organique solide initial, étant caractérisé par les points suivants :
a) le ou les guides d'ondes sont agencés de façon à diriger les micro-ondes de telle sorte que le champ électromagnétique de ces micro-ondes soit directement au contact de la surface libre du produit solide, provoquant ainsi la fusion de la partie supérieure du solide, avec la formation d'une couche supérieure liquide ;
b) il comporte des moyens permettant d'éroder la partie encore solide du produit qui se trouve au contact du liquide, ces moyens permettant l'obtention de particules du produit solide en suspension dans le liquide ;
c) il comporte des moyens permettant d'agiter cette suspension ;
d) il comporte des moyens permettant de déplacer les moyens d'érosion et d'agitation vers le bas du récipient, en même temps que la fusion progresse, le dispositif étant agencé de telle sorte que les guides d'ondes continuent à diriger le champ électromagnétique au contact de la surface libre du liquide lors de ce déplacement, au moins pendant une partie du temps de fusion ;
e) il comporte des moyens permettant de faire sortir le produit du récipient lorsqu'il est entièrement fondu.

L'invention sera aisément comprise à l'aide des exemples non limitatifs qui suivent et des figures toutes schématiques relatives à ces exemples.

Sur le dessin :
- la figure 1 représente en coupe verticale un dispositif conforme à l'invention comportant une tête d'érosion ;
- la figure 2 représente, vue de dessous, la tête d'érosion du dispositif représenté à la figure 1 ; cette tête comportant des pales ;
- la figure 3 représente en coupe verticale une partie de la tête d'érosion, représentée à la figure 2, avec une pale comportant des dents, la coupe de la figure 3 étant schématisée par les segments de ligne droite III-III à la figure 2.
- la figure 4 représente en coupe verticale la pale représentée à la figure 3, la coupe de la figure 4 étant schématisée par les segments de ligne droite IV-IV à la figure 3.

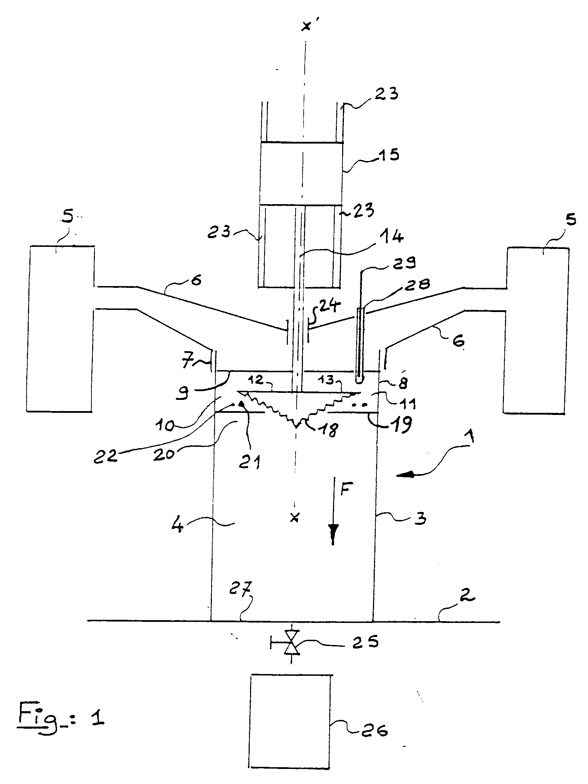

La figure 1 représente un dispositif 1 conforme à l'invention. Ce dispositif 1 comporte une plaque 2 sur laquelle est posée le récipient 3 qui est un fût métallique. Ce récipient 3 contient le produit organique 4 qui est initialement à l'état solide. De chacun des deux générateurs 5 de micro-ondes part un guide d'ondes 6. A titre d'exemple non limitatif, les fréquences de micro-ondes varient de 875 MHz à 2450 MHz. Ces deux guides d'ondes sont fixés à un couvercle 7 qui s'adapte à la partie supérieure 8 du récipient 3, le couvercle initial de ce récipient 3 ayant été enlevé au préalable. Le récipient 3 sert d'emballage au produit 4 qui a été solidifié en masse in situ dans ce récipient 3, en formant ainsi un bloc unique solide. Le couvercle 7 et les guides d'ondes 6 sont réalisés par exemple en acier inoxydable.

Les micro-ondes sont dirigées par les guides 6 de telle sorte que le champ électromagnétique de ces micro-ondes arrive directement au contact de la surface libre 9 du produit 4 solide initialement. Ce champ provoque la fusion de la partie supérieure 10 du produit 4, qui forme ainsi une couche supérieure liquide 11.

Le dispositif 1 comporte un dispositif 12 pour éroder le produit 4. Ce dispositif 12 comporte une tête d'érosion 13 reliée à un arbre 14 vertical.

L'axe vertical xx' de l'arbre 14 coïncide avec l'axe du fût 3, la figure 1 étant une coupe verticale effectuée selon l'axe xx'. Le moteur 15 entraîne l'arbre 14 en rotation autour de l'axe xx', et l'arbre 14 entraîne la tête 13 en rotation autour de cet axe xx'. La figure 2 représente vue de dessous la tête 13. Cette tête 13, de diamètre D, comporte une pièce conique 16 dont la conicité est tournée vers le haut. Sur cette pièce conique 16 sont fixées trois pales 17 identiques constituées par des lames.

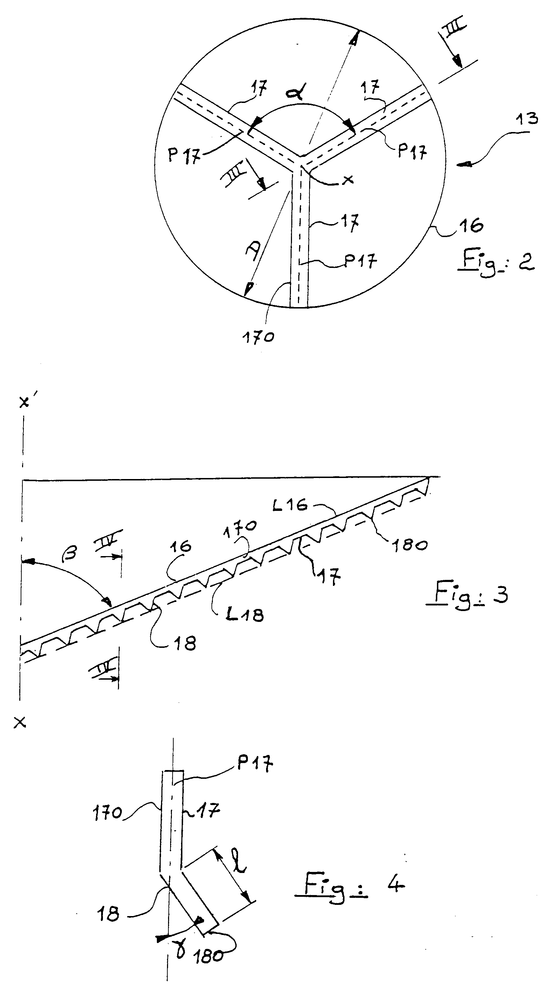

La figure 3 représente en coupe verticale selon l'axe xx' une partie de la pièce conique 16 avec une pale 17. Chaque pale 17 a la forme d'une plaque dont la partie supérieure 170 se raccordant à la pièce 16 a une orientation verticale. Les plans moyens P17 de ces parties 170, représentés en pointillés à la figure 2, représentent l'orientation moyenne des pales 17 correspondantes, et passent par l'axe xx', schématisé par le point x à la figure 2. Deux plans verticaux P17 successifs quelconques forment un angle α de 120°. Les pales 17 comportent des dents 18. Sur la figure 3, la ligne droite L18 en pointillés joignant les pointes 180 des dents 18 se dirige vers le haut en s'éloignant de l'axe xx', cette ligne L18 étant par exemple parallèle à la ligne droite L16 correspondant à la pièce 16 en coupe à la figure 3, cette ligne L16 faisant l'angle aigu β avec l'axe xx', β étant l'angle de conicité (figure 3), c'est-à-dire que la ligne L18 forme l'angle aigu β, tourné vers le haut, avec une verticale passant par cette ligne. Le nombre de pales 17 peut être différent de trois et l'angle α peut être différent de 120°. Le nombre de dents 18 peut varier dans de larges limites, pour chaque pale 17.

La figure 4 représente une coupe verticale de la pale 17 représentée à la figure 3, cette coupe étant parallèle à l'axe xx' et perpendiculaire au plan P₁₇ de cette pale. On voit sur cette figure 4 que les dents 18, reliées à la partie 170 forment l'angle γ avec le plan P₁₇, ces dents 18 ayant la longueur "l" mesurée dans le plan de la figure 4.

Les angles β et γ peuvent varier dans de larges limites, en fonction de la viscosité du liquide 11, β étant de préférence au moins égal à 70° et au plus égal à 90° et γ étant de préférence au moins égal à 30° et au plus égal à 60°. Les dents 18 peuvent être reliées directement à la pièce conique 16 si on le désire, les parties 170 n'existant pas dans ce cas.

Lors de sa rotation, la tête 13, par ses dents 18 érode la surface solide 19 du produit 4 qui se trouve au contact du liquide 11, ainsi que la portion supérieure 20 de solide 4 au voisinage de cette surface 19. Cette érosion, due à l'action des dents 18, donne des particules solides 21 qui forment une suspension 22 avec le liquide 11. La tête 13 permet également d'agiter cette suspension car l'orientation oblique des dents 18, due à l'angle γ, crée un mouvement de la suspension 22 vers le haut du récipient 3, ce qui facilite la fusion des particules 21 au contact du liquide 11 chaud. La tête 13 joue ainsi à la fois un rôle d'érosion et d'agitation.

Le dispositif 1 permet donc une action thermo-mécanique combinant une fusion, par l'action des micro-ondes, à une abrasion, ou "grignotage", du solide 4, donnant la suspension 22 agitée.

La tête 13 se déplace verticalement vers le bas dans le sens de la flèche F lorsque la fusion progresse, c'est-à-dire au fur et à mesure que la surface solide 19 progresse vers le bas. Pour permettre ce mouvement vertical de la tête 13, le moteur 15 peut se déplacer verticalement le long des tiges support 23, en déplaçant ainsi verticalement l'arbre 14 qui coulisse dans l'ouverture 24 du couvercle 7. Les moyens permettant le déplacement vertical du moteur 15 sont des moyens connus, par exemple un système de crémaillères, non représenté sur le dessin dans un but de simplification.

Lorsque tout le produit 4 est fondu, on ouvre la vanne 25 qui permet de faire couler le produit 4 liquide dans le récipient d'utilisation 26.

La figure 1 représente un état intermédiaire de la fusion, la surface solide 19 se trouvant entre la surface 9, initialement solide, et le fond 27 du récipient 3. Pendant au moins une partie du temps de fusion, on continue à faire parvenir le champ électromagnétique des micro-ondes, par les guides 6, au contact de la surface libre 9 liquide du produit 4.

Le dispositif 1 conforme à l'invention peut être agencé de façon à réguler le processus de fusion. Dans ce but, le couvercle 7 comporte un tube métallique 28 pouvant coulisser dans la direction verticale pour être mis en contact avec la partie supérieure de la couche liquide 11. Le tube 28 est réalisé avec une matière dont la conductivité thermique est élevée, par exemple le cuivre. On dispose dans le tube 28 une sonde thermométrique 29 qui mesure ainsi la température de la partie supérieure de la couche liquide 11, la sonde 29 étant protégée des interférences avec les micro-ondes par le tube métallique 28 qui joue le rôle d'un écran de blindage.

La connaissance de cette température permet de réguler par asservissement, de façon manuelle ou automatique, le processus de fusion. Ces moyens de régulation, qui sont connus en soi et ne sont pas représentés sur le dessin dans un but de simplification, permettent de faire varier l'émission des micro-ondes, à partir des sources 5, en arrêtant ou en diminuant cette émission lorsque la température détectée par la sonde 29 atteint une valeur maximale prédéterminée, la température de la partie supérieure de la couche liquide 11, c'est-à-dire la température maximum de l'ensemble du produit 4, restant ainsi toujours au plus égale à une valeur critique prédéterminée, pour éviter ou limiter la dégradation du produit 4.

Cette régulation peut être étendue au processus d'érosion et d'agitation, la vitesse de rotation de la tête 13, ainsi éventuellement que son déplacement vertical, pouvant être modifiés, de façon manuelle ou automatique, en fonction de la température mesurée par la sonde 29.

L'invention permet les avantages suivants :
- on peut utiliser directement le récipient 3 métallique employé pour conditionner le produit 4, la fusion s'effectuant ainsi in situ directement dans l'emballage métallique du produit ;
- la fusion est rapide ;
- la dépense d'énergie est faible, et on peut moduler l'utilisation des micro-ondes, par exemple en arrêtant par intermittences l'émission de ces micro-ondes, d'où une grande souplesse d'utilisation, cette modulation pouvant être étendue à l'agitation elle-même, c'est-à-dire à tout le processus de fusion ;
- la fusion est obtenue sans dégradation notable du matériau, car l'érosion et l'agitation de la suspension permettent une bonne répartition de la chaleur, bien que le couplage avec le champ électromagnétique soit plus élevé pour le liquide que pour le solide.

### Exemples de réalisation

L'exemple 1 conforme à l'invention et l'exemple 2 comparatif qui suivent permettront de mieux comprendre l'invention.

### Exemple 1

On utilise le dispositif 1 pour fondre 200 litres de prépolymère polyester TDI, type NOURYTHANE A9 de la Société AKZO. Ce produit 4 étant destiné à fabriquer des polyuréthannes.
- Caractéristiques du dispositif 1 et des générateurs 5 :
   . Sources 5 de micro-ondes : fréquence : 2450 MHz ; puissance de chaque source : 1200 W.
   . Dispositif 12 d'érosion : Puissance du moteur 15 : 1100 W ; diamètre D de la tête 13 : 350 mm ; angle β de conicité : 80 degrés ; nombre de dents 18 : 15 pour chaque pale 17 ; longueur l des dents : 30 mm ; angle d'inclinaison γ des dents : 45 degrés.
- Caractéristiques du produit 4 initial :
   . point de fusion : 60°C
   . taux de NCO : 4,24 % .

On réalise la fusion en faisant fonctionner par intermittences les sources 5 pour éviter que la température du produit 4 dépasse 72°C. La vitesse de rotation de la tête 13 varie de 80 t/min (tours/minute) à 195 t/min, et la vitesse de déplacement vertical de la tête est de 11 cm/heure.

On réalise la fusion complète en 7,4 heures. L'énergie totale utilisée est de 30,14 kWh ; soit : 4000 W utiles pendant 5,5 heures pour les sources 5 et 1100 W utiles pendant 7,4 heures pour le dispositif 12.

Pendant la fusion, la température du produit 4 est supérieure à 40°C et inférieure à 72°C.

Le taux de NCO dans le produit à la fin de la fusion est de 4,05 %, la variation relative du taux de NCO due à l'opération de fusion étant donc d'environ 4,5 %.

### Exemple 2

Dans cet exemple non conforme à l'invention, on fond 200 litres du même produit que dans l'exemple 1 (NOURYTHANE A9), conditionné de la même façon dans un fût métallique. La fusion est opérée dans une étuve à air chaud.

L'opération de fusion dure 72 heures, pour une énergie dépensée de 350 kWh. Cette fusion par étuvage donne une variation relative du taux de NCO de 3,2 %.

L'invention permet donc un gain considérable de temps et d'énergie pour la fusion, pratiquement sans pénaliser le produit par rapport aux procédés connus de fusion.

Bien entendu, l'invention n'est pas limitée aux exemples précédemment décrits.

L'invention s'applique à tout produit organique ou tout mélange de produits organiques susceptible de fondre par l'utilisation de micro-ondes ; de tels produits étant utilisés par exemple dans l'industrie chimique, dans l'industrie pharmaceutique, dans la parfumerie, dans l'industrie agro-alimentaire, dans l'industrie de la photo, dans l'industrie des matières plastiques. De tels produits sont pas exemple des thermofusibles (hot-melts), des mélasses, des résines, des solutions solides.

## Revendications

1. Procédé permettant de fondre un produit organique (4) à l'aide de micro-ondes, ce procédé, dans lequel on fixe au moins un guide d'ondes (6) à un récipient (3) métallique contenant le produit organique (4) solide initial, étant caractérisé par les points suivants :
a) on dirige des micro-ondes par ce ou ces guides d'ondes (6) de telle sorte que le champ électromagnétique de ces micro-ondes soit directement au contact de la surface (9) supérieure libre du produit solide ; ce champ électromagnétique provoque la fusion de la partie supérieure (10) du solide (4) donnant ainsi une couche supérieure liquide (11) ;
b) on érode la partie encore solide du produit (4) qui se trouve au contact du liquide (11), de façon à obtenir des particules (21) de produit solide (4) en suspension dans le liquide, et on agite cette suspension (22) ;
c) l'érosion et l'agitation progressent vers le bas du récipient (3) en même temps que la fusion du produit (4), alors que l'on continue de faire arriver le champ électromagnétique au contact de la surface libre (9) du liquide (11), au moins pendant une partie du temps de fusion ;
d) on fait sortir le produit (4) du récipient (3) lorsqu'il est entièrement fondu.

2. Procédé selon la revendication 1, caractérisé en ce que l'érosion et l'agitation sont réalisées de façon à provoquer un mouvement de la suspension (22) vers le haut du récipient (3).

3. Procédé selon l'une quelconque des revendications 1 ou 2, caractérisé en ce qu'on mesure la température, à la partie supérieure de la couche liquide (11) et en ce que l'émission des micro-ondes est régulée en fonction de cette température.

4. Procédé selon la revendication 3, caractérisé en ce que l'érosion et l'agitation sont régulées en fonction de cette température.

5. Procédé selon la revendication 4, caractérisé en ce que la progression de l'érosion et de l'agitation vers le bas du récipient est régulée en fonction de cette température.

6. Dispositif (1) permettant de fondre un produit organique (4) à l'aide de micro-ondes, ce dispositif, qui comporte au moins un guide d'ondes (6) pour micro-ondes, et des moyens (7) permettant de fixer le ou les guides d'ondes (6) à un récipient (3) métallique contenant le produit organique (4) solide initial, étant caractérisé par les points suivants :
a) le ou les guides d'ondes (6) sont agencés de façon à diriger les micro-ondes de telle sorte que le champ électromagnétique de ces micro-ondes soit directement au contact de la surface libre (9) du produit solide (4), provoquant ainsi la fusion de la partie supérieure (10) du solide (4), avec la formation d'une couche supérieure (11) liquide ;
b) il comporte des moyens (12) permettant d'éroder la partie encore solide du produit (4) qui se trouve au contact du liquide (11), ces moyens permettant l'obtention de particules (21) du produit solide en suspension dans le liquide ;
c) il comporte des moyens (12) permettant d'agiter cette suspension (22) ;
d) il comporte des moyens permettant de déplacer les moyens (12) d'érosion et d'agitation vers le bas du récipient (3), en même temps que la fusion progresse, le dispositif (1) étant agencé de telle sorte que les guides d'ondes (6) continuent à diriger le champ électromagnétique au contact de la surface libre (9) du liquide lors de ce déplacement, au moins pendant une partie du temps de fusion ;
e) il comporte des moyens (25) permettant de faire sortir le produit (4) du récipient (3) lorsqu'il est entièrement fondu.

7. Dispositif (1) selon la revendication 6, caractérisé en ce qu'il comporte des moyens (13) permettant de créer un mouvement de la suspension (22) vers le haut du récipient (3).

8. Dispositif (1) selon la revendication 7, caractérisé en ce que les moyens d'érosion (12) comportent une tête (13) avec des dents (18) et des moyens (14, 15) permettant d'entraîner cette tête (13) en rotation autour d'un axe vertical xx', et des moyens permettant de déplacer la tête (13) dans le sens vertical.

9. Dispositif (1) selon la revendication 8, caractérisé en ce que les dents (18) font partie de plusieurs pales (17) ayant chacune une orientation moyenne verticale, les dents (18) de chaque pale (17) formant un angleγ avec le plan vertical (P₁₇) d'orientation moyenne de la pale (17) correspondante.

10. Dispositif (1) selon la revendication 9, caractérisé en ce que, pour chaque pale (17) les pointes (180) des dents (18) sont disposées sur une ligne droite (L18) formant un angle aigu β, tourné vers le haut, avec une verticale passant par cette ligne.

11. Dispositif (1) selon l'une quelconque des revendications 6 à 10, caractérisé en ce qu'il comporte des moyens (28, 29) permettant de mesurer la température dans la partie supérieure de la couche liquide (11).

12. Dispositif (1) selon la revendication 11, caractérisé en ce que ces moyens (28, 29) pour mesurer la température comportent un tube (28) métallique et une sonde thermométrique (29) disposée dans ce tube (28).

13. Dispositif (1) selon l'une quelconque des revendications 11 ou 12, caractérisé en ce qu'il comporte des moyens permettant de réguler l'émission des micro-ondes en fonction de cette température.

14. Dispositif (1) selon la revendication 13, caractérisé en ce qu'il comporte des moyens permettant de réguler les moyens (12) d'érosion et d'agitation en fonction de cette température.

15. Dispositif (1) selon la revendication 14, caractérisé en ce qu'il comporte des moyens permettant de réguler, en fonction de cette température, les moyens permettant de déplacer les moyens (12) d'érosion et d'agitation vers le bas du récipient (3).

## Patentansprüche

1. Verfahren zum Schmelzen eines organischen Stoffs (4) mit Hilfe von Mikrowellen, wobei dieses Verfahren, bei dem man mindestens einen Wellenleiter (6) an einem Metallbehälter (3) befestigt, der den festen organischen Ausgangsstoff (4) enthält, gekennzeichnet ist durch folgende Punkte:
a) Man leitet Mikrowellen über diesen oder diese Wellenleiter (6) in der Weise, daß das elektromagnetische Feld dieser Mikrowellen direkt in Berührung mit der oberen, freien Oberfläche (9) des festen Stoffs kommt; dieses elektromagnetische Feld bewirkt das Schmelzen des oberen Bereichs (10) des Feststoffs (4), woraus eine obere, flüssige Schicht (11) entsteht;
b) Man erodiert den noch festen Teil des Stoffs (4), der mit der Flüssigkeit (11) in Berührung steht, in der Weise, daß man in der Flüssigkeit suspendierte Partikel (21) des Feststoffs (4) erhält, und man bewegt diese Suspension (22);
c) Erodierung und Bewegung setzen sich nach unten in den Behälter (3) hin gleichzeitig wie das Schmelzen des Stoffs (4) fort, während man weiterhin dafür sorgt, daß das elektromagnetische Feld in Berührung mit der freien Oberfläche (9) der Flüssigkeit (11) kommt, und zwar mindestens während eines Teils der Schmelzzeit;
d) Man leert den Stoff (4) aus dem Behälter (3), wenn er vollständig geschmolzen ist.

2. Verfahren nach Anspruch 1, dadurch gekennzeichnet, daß die Erodierung und Bewegung so durchgeführt werden, daß sie eine Bewegung der Suspension (22) zum oberen Teil des Behälters (3) hin bewirken.

3. Verfahren nach einem der Ansprüche 1 oder 2, dadurch gekennzeichnet, daß man die Temperatur im oberen Bereich der flüssigen Schicht (11) mißt und daß die Ausstrahlung der Mikrowellen in Abhängigkeit von dieser Temperatur reguliert wird.

4. Verfahren nach Anspruch 3, dadurch gekennzeichnet, daß Erodierung und Bewegung in Abhängigkeit von dieser Temperatur geregelt werden.

5. Verfahren nach Anspruch 4, dadurch gekennzeichnet, daß die fortschreitende Erodierung und Bewegung zum unteren Teil des Behälters hin in Abhängigkeit von dieser Temperatur geregelt werden.

6. Vorrichtung (1) zum Schmelzen eines organischen Stoffs (4) mit Hilfe von Mikrowellen, wobei diese Vorrichtung, die mindestens einen Wellenleiter (6) für Mikrowellen sowie Vorrichtungen (7) zum Befestigen des oder der Wellenleiter (6) an einem Metallbehälter (3) umfaßt, der den organischen Ausgangsfeststoff (4) enthält, durch folgende Punkte gekennzeichnet ist:
a) Der oder die Wellenleiter (6) sind so angeordnet, daß sie die Mikrowellen in der Weise lenken, daß das elektromagnetische Feld dieser Mikrowellen direkt in Berührung steht mit der freien Oberfläche (9) des Feststoffs (4), wodurch dessen oberer Bereich (10) schmilzt, wobei sich eine obere flüssige Schicht (11) bildet;
b) Sie umfaßt Vorrichtungen (12) zum Erodieren des noch festen Teils des Stoffs (4), der in Berührung mit der Flüssigkeit (11) steht, wobei man durch diese Vorrichtungen in der Flüssigkeit (11) suspendierte Feststoffpartikel (21) erhält;
c) Sie umfaßt Vorrichtungen (12) zum Bewegen dieser Suspension (22);
d) Sie umfaßt Vorrichtungen, mit denen die Erodierungs- und Bewegungsvorrichtungen (12) mit fortschreitendem Schmelzen nach unten in den Behälter (3) verschoben werden können, wobei die Vorrichtung (1) so vorgesehen ist, daß die Wellenleiter (6) das mit der freien Oberfläche (9) der Flüssigkeit während dieses Verschiebens in Berührung stehende elektromagnetische Feld weiterhin leiten, zumindest während eines Teils der Schmelzzeit;
e) Sie weist Vorrichtungen (25) auf, mit denen der Stoff (4) aus dem Behälter (3) geleert werden kann, wenn er vollkommen geschmolzen ist.

7. Vorrichtung (1) nach Anspruch 6, dadurch gekennzeichnet, daß sie Vorrichtungen (13) umfaßt, mit denen die Suspension (22) zum oberen Teil des Behälters (3) hin bewegt werden kann.

8. Vorrichtung (1) nach Anspruch 7, dadurch gekennzeichnet, daß die Erodierungsvorrichtungen (12) einen Kopf (13) mit Zähnen (18) sowie Vorrichtungen (14, 15) für den Drehantrieb dieses Kopfs (13) um eine Vertikalachse xx' sowie Vorrichtungen umfassen, mit denen der Kopf (13) in Vertikalrichtung bewegt werden kann.

9. Vorrichtung (1) nach Anspruch 8, dadurch gekennzeichnet, daß die Zähne (18) Teil mehrerer Schaufeln (17) sind, die jeweils eine vertikale Mittenausrichtung haben, wobei die Zähne (18) jeder Schaufel (17) einen Winkel γ mit der Vertikalebene (P₁₇) mittlerer Ausrichtung der entsprechenden Schaufel (17) bilden.

10. Vorrichtung (1) nach Anspruch 9, dadurch gekennzeichnet, daß bei jeder Schaufel (17) die Spitzen (180) der Zähne (18) auf einer Geraden (L18) angeordnet sind, die einen nach oben weisenden Spitzwinkel β mit einer Vertikalen bildet, die durch diese Gerade verläuft.

11. Vorrichtung (1) nach einem der Ansprüche 6 bis 10, dadurch gekennzeichnet, daß sie Vorrichtungen (28, 29) umfaßt, mit denen man die Temperatur im oberen Bereich der flüssigen Schicht (11) messen kann.

12. Vorrichtung (1) nach Anspruch 11, dadurch gekennzeichnet, daß die Vorrichtungen (28, 29) zum Messen der Temperatur ein Metallrohr (28) und eine in diesem Metallrohr (28) angeordnete thermometrische Sonde (29) umfassen.

13. Vorrichtung (1) nach einem der Ansprüche 11 oder 12, dadurch gekennzeichnet, daß sie Vorrichtungen umfaßt, die eine Regelung des Ausstrahlens der Mikrowellen entsprechend dieser Temperatur ermöglichen.

14. Vorrichtung (1) nach Anspruch 13, dadurch gekennzeichnet, daß sie Vorrichtungen umfaßt, die eine Steuerung der Erodierungs- und Bewegungsvorrichtungen (12) in Abhängigkeit von dieser Temperatur ermöglichen.

15. Vorrichtung (1) nach Anspruch 14, dadurch gekennzeichnet, daß sie Vorrichtungen umfaßt, mit denen in Abhängigkeit von dieser Temperatur die Vorrichtungen zum Versetzen der Erodierungs- und Bewegungsvorrichtungen (12) nach unten in den Behälter (3) geregelt werden können.

## Claims

1. A method of melting an organic product (4) by means of microwaves, this method, in which at least one waveguide (6) is fastened to a metal receptacle (3) containing the initial solid organic product (4), being characterised by the following features:
a) microwaves are directed by said waveguide or waveguides (6) in such a manner that the electromagnetic field of these microwaves is directly in contact with the free upper surface (9) of the solid product; this electromagnetic field causes the melting of the upper part (10) of the solid (4), thus forming an upper liquid layer (11);
b) the part of the product (4) which is still solid and is in contact with the liquid (11) is eroded so as to obtain particles (21) of solid product (4) suspended in the liquid, and this suspension (22) is agitated;
c) the erosion and the agitation progress towards the bottom of the receptacle (3) at the same time as the product (4) is melted, while one continues to bring the electromagnetic field into contact with the free surface (9) of the liquid (11), at least during part of the melting time;
d) the product (4) is removed from the receptacle (3) when it is completely melted.

2. A method according to Claim 1, characterised in that the erosion and the agitation are carried out in such a manner as to cause movement of the suspension (22) towards the top of the receptacle (3).

3. A method according to any one of Claims 1 or 2, characterised in that the temperature is measured at the upper part of the liquid layer (11) and that the emission of the microwaves is regulated as a function of said temperature.

4. A method according to Claim 3, characterised in that the erosion and the agitation are regulated as a function of said temperature.

5. A method according to Claim 4, characterised in that the progression of the erosion and of the agitation towards the bottom of the receptacle is regulated as a function of said temperature.

6. A device (1) which makes it possible to melt an organic product (4) by means of microwaves, this device, which comprises at least one waveguide (6) for microwaves, and means (7) making it possible to fasten the waveguide or waveguides (6) to a metal receptacle (3) containing the initial solid organic product (4), being characterised by the following features:
a) the waveguide or waveguides (6) are so arranged as to direct the microwaves in such a manner that the electromagnetic field of these microwaves is directly in contact with the free surface (9) of the solid product (4), thus causing the melting of the upper part (10) of the solid (4), with the formation of an upper liquid layer (11);
b) it comprises means (12) making it possible to erode the part of the product (4) which is still solid and which is in contact with the liquid (11), these means permitting the obtaining of particles (21) of the solid product suspended in the liquid;
c) it comprises means (12) for agitating this suspension (22);
d) it comprises means making it possible to displace the erosion and agitation means (12) towards the bottom of the receptacle (3) at the same time as the melting progresses, the device (1) being so arranged that the waveguides (6) continue to direct the electromagnetic field in contact with the free surface (9) of the liquid upon this displacement, at least during part of the melting time;
e) it comprises means (25) making it possible to cause the product (4) to emerge from the receptacle (3) when it is completely melted.

7. A device (1) according to Claim 6, characterised in that it comprise means (13) which make it possible to create a movement of the suspension (22) towards the top of the receptacle (3).

8. A device (1) according to Claim 7, characterised in that the erosion means (12) comprise a head (13) with teeth (18) and means (14, 15) making it possible to drive said head (13) in rotation around a vertical axis xx', and means which make it possible to displace the head (13) in the vertical direction.

9. A device (1) according to Claim 8, characterised in that the teeth (18) are part of several blades (17) each having a vertical average orientation, the teeth (18) of each blade (17) forming an angle γ with the vertical plane (P₁₇) of average orientation of the corresponding blade (17).

10. A device (1) according to Claim 9, characterised in that, for each blade (17), the points (180) of the teeth (18) are arranged on a straight line (L18) forming an acute angle β, opening upward, with a vertical line passing through said line.

11. A device (1) according to any one of Claims 6 to 10, characterised in that it comprises means (28, 29) making it possible to measure the temperature in the upper part of the liquid layer (11).

12. A device (1) according to Claim 11, characterised in that said means (28, 29) for measuring the temperature comprise a metal tube (28) and a thermometric probe (29) arranged in said tube (28).

13. A device (1) according to any one of Claims 11 or 12, characterised in that it comprises means which make it possible to regulate the emission of the microwaves as a function of said temperature.

14. A device (1) according to Claim 13, characterised in that it comprises means making it possible to regulate the erosion and agitation means (12) as a function of said temperature.

15. A device (1) according to Claim 14, characterised in that it comprises means making it possible to regulate, as a function of said temperature, the means making it possible to displace the erosion and agitation means (12) towards the bottom of the receptacle (3).
